# EUROPEAN PATENT SPECIFICATION

(11) **EP 3 144 364 B1**
(45) Date of publication and mention of the grant of the patent: **21.08.2019**
(21) Application number: 15792703.9
(22) Date of filing: 07.05.2015
(51) Int. Cl.: C09J 125/08, C09J 7/22, G06F 3/041, C09J 109/06, C09J 153/02, C09J 7/38

(54) **NON-CURABLE RUBBER-BASED ADHESIVE COMPOSITION FOR TOUCH SCREEN PANEL, AND NON-CURABLE RUBBER-BASED ADHESIVE FILM FOR TOUCH SCREEN PANEL USING SAME**
NICHTHÄRTENDE KLEBSTOFFZUSAMMENSETZUNG AUF KAUTSCHUKBASIS FÜR BERÜHRUNGSBILDSCHIRMTAFEL UND NICHTHÄRTENDE KLEBSTOFFZUSAMMENSETZUNG AUF KAUTSCHUKBASIS FÜR BERÜHRUNGSBILDSCHIRM DAMIT
COMPOSITION ADHÉSIVE À BASE DE CAOUTCHOUC NON DURCISSABLE POUR PANNEAU D'ÉCRAN TACTILE, ET FILM ADHÉSIF À BASE DE CAOUTCHOUC NON DURCISSABLE POUR PANNEAU D'ÉCRAN TACTILE L'EMPLOYANT

(30) Priority: 13.05.2014 KR 20140057121
(43) Date of publication of application: 22.03.2017
(73) Proprietor: LG CHEM, LTD., Yeongdeungpo-gu Seoul 07336 (KR)
(72) Inventor: JANG, Ae-Jung, Anyang-si Gyeonggi-do 431-735 (KR); KIM, Jang-Soon, Seongnam-si Gyeonggi-do 463-420 (KR)
(74) Representative: Cabinet Plasseraud
(86) International application number: PCT/KR2015/004537
(87) International publication number: WO 2015/174679

(56) References cited:
- EP-A1- 1 417 255
- EP-A2- 0 451 920
- WO-A1-2013/191340
- JP-A- H0 578 637
- KR-B1- 100 914 082
- US-A- 4 728 572
- US-A- 5 210 147
- US-A- 5 242 984
- US-A1- 2006 251 889

## Description

### [Technical Field]

The present invention relates to a non-curable rubber-based adhesive composition for a touch screen panel, and a non-curable rubber-based adhesive film for a touch screen panel using the same.

### [Background Art]

A touch screen panel is a panel that identifies specific positions of characters or other positions shown on a screen when being touched by a human hand or an object and treats specific functions, without using input devices such as a keyboard or a mouse. A touch screen to which the touch screen panel is applied has good portability and is usable intuitionally due to a simple operation method, thereby being widely used for mobile terminals such as cell phones, navigations, etc.

The touch screen panel is basically configured to include a touch screen panel, a controller, a driver SW, etc. The touch screen panel is configured to include an upper plate (film) on which a transparent conductive film (ITO: indium tin oxide) is deposited and a lower plate (film or glass), and has functions to determine whether there is a touch input, detect input coordinates, and transfer signals to the controller. The controller has functions to convert the signals transferred from the touch screen panel into digital signals, and output the coordinates on a display, and the driver SW is a program that receives the digital signals inputting from the controller so that the touch screen panel is implemented according to each operating system.

The touch screen panel is classified into a resistive type touch screen panel, a capacitive type touch screen panel, a SAW (surface accoustic wave; ultrasonic wave) type touch screen panel, an IR (infrared rays) type touch screen panel, etc. Among them, the capacitive type touch screen panel has been recently spotlighted due to excellent durability and transmission.

An adhesive is a material that attaches two or more products having completely different physical properties, wherein a component thereof is not changed unless the products are artificially moved. That is, the adhesive is a material having viscoelastic property which is capable of strongly adhering the products even under a slight pressure in a short time.

An adhesive composition is generally a rubber-based adhesive composition, an acrylic-based adhesive composition, and a silicon-based adhesive composition, etc. Among them, the acrylic-based adhesive composition is the most widely used due to various application characteristics thereof. However, an adhesive layer formed by curing the acrylic-based adhesive composition has a problem in that wetting property to a base film is poor. When the rubber-based adhesive composition is applied to the touch screen, wetting property is good, but there is a problem in that compositions are not various, and further, since the number of application fields thereof is small, there are difficulties in performing processes, for example, a crosslinking process is required.

### [Disclosure]

### [Technical Problem]

It is an aspect of the present invention to provide a non-curable rubber-based adhesive composition for a touch screen panel, containing a styrene-isoprene-styrene (SIS) rubber, and a non-curable rubber-based adhesive film for a touch screen panel using the same.

However, technical problems to be achieved in the present invention are not limited to the above-mentioned problems, and other problems will be clearly understood to those skilled in the art from the following descriptions.

### [Technical Solution]

In accordance with one aspect of the present invention, there is provided a non-curable rubber-based adhesive composition for a touch screen panel, containing a styrene-isoprene-styrene (SIS) rubber.

The weight average molecular weight of the styrene-isoprene-styrene (SIS) rubber may be 5,000 to 200,000.

The styrene content of the styrene-isoprene-styrene (SIS) rubber may be 15 wt% to 30 wt%.

The non-curable rubber-based adhesive composition does not contain an adhesion promoter.

In accordance with another aspect of the present invention, there is provided a non-curable rubber-based adhesive film for a touch screen panel, including: a base film; an adhesive layer formed by coating the non-curable rubber-based adhesive composition for the touch screen panel on the base film; and a release film formed on the adhesive layer.

The curing degree (gel content) of the adhesive layer may be 0%.

The release peeling force of the adhesive layer may be 10 g/in to 30 g/in.

The release film may include a base layer; and a release layer formed on one surface or both surfaces of the base layer.

The release film may further include an antistatic layer between the base layer and the release layer.

### [Advantageous Effects]

The non-curable rubber-based adhesive composition for a touch screen panel according to the present invention contains a styrene-isoprene-styrene (SIS) rubber. Even though the adhesive layer formed by coating the non-curable rubber-based adhesive composition for the touch screen panel is not cured, the adhesive layer may maintain durability for being applied to the touch screen panel by the rubber-based adhesive composition, have excellent wetting property to the base film, and maintain a predetermined level of release peeling force between the base film and the release film without causing residues after high-temperature peeling.

### [Description of Drawings]

FIG. 1 is a cross-sectional view schematically showing a non-curable rubber-based adhesive film for a touch screen panel according to an exemplary embodiment of the present invention.
FIG. 2 is a cross-sectional view schematically showing a non-curable rubber-based adhesive film for a touch screen panel according to another exemplary embodiment of the present invention.

### [Best Mode]

The present inventors studied a non-curable rubber-based adhesive film for a touch screen panel, and as a result, found that an adhesive layer formed by coating the non-curable rubber-based adhesive composition for the touch screen panel is capable of maintaining durability for being applied to the touch screen panel, having excellent wetting property to a base film, and maintaining a predetermined level of release peeling force between the base film and a release film without causing residues after high-temperature peeling, and completed the present invention.

Hereinafter, exemplary embodiments of the present invention will be described in detail with reference to the accompanying drawings so that those skilled in the art may easily practice the present invention. The present invention may be implemented in various different ways and is not limited to the exemplary embodiments provided in the present description.

The description of parts deviating from the subject matter of the present invention will be omitted in order to clearly describe the present invention. Like reference numerals designate like elements throughout the specification.

In the drawings, thicknesses of various layers and regions are exaggerated for clarity. In the drawings, thicknesses of partial layers and regions are exaggerated for convenience of explanation.

Hereinafter, formation of any configuration "on (or below)" of a substrate means that any configuration is formed while contacting an upper surface (or a lower surface) of the substrate, and should not be intended to exclude other configurations between the substrate and any configuration formed on (or below) the substrate.

The present invention provides a non-curable rubber-based adhesive composition for a touch screen panel containing a styrene-isoprene-styrene (SIS) rubber.

The styrene-isoprene-styrene (SIS) rubber has a low glass transition temperature (Tg) and consists of hydrocarbons only, and has significantly low surface energy characteristic, such that the adhesive composition containing the styrene-isoprene-styrene (SIS) rubber provides more excellent wetting property to a base as compared to the existing acrylic adhesive composition. In addition, the styrene-isoprene-styrene (SIS) rubber is a kind of an isoprene rubber, and has excellent elasticity and softness as compared to other rubbers.

The styrene-isoprene-styrene (SIS) rubber preferably has a weight average molecular weight of 5,000 to 200,000, and more preferably, 60,000, but the weight average molecular weight of the styrene-isoprene-styrene (SIS) rubber is not limited thereto. Here, when the weight average molecular weight of the styrene-isoprene-styrene (SIS) rubber is less than 5,000, heat resistance is low, and when the weight average molecular weight of the styrene-isoprene-styrene (SIS) rubber is more than 200,000, elasticity of the rubber is deteriorated, such that peeling force and wetting property are low.

The styrene content of the styrene-isoprene-styrene (SIS) rubber is preferably 15 wt% to 30 wt%, but the styrene content of the styrene-isoprene-styrene (SIS) rubber is not limited thereto. Here, when the styrene content thereof is less than 15 wt%, cohesion is not sufficient, and hardness is low, such that high-temperature durability is deteriorated, and when the styrene content thereof is more than 30 wt%, peeling strength is reduced, such that the adhesion force is not sufficient.

Further, the styrene-isoprene-styrene (SIS) rubber preferably has a content of 10 parts by weight to 30 parts by weight based on 100 parts by weight of the non-curable rubber-based adhesive composition for the touch screen panel, but the content of the styrene-isoprene-styrene (SIS) rubber is not limited thereto. Here, when the content of the styrene-isoprene-styrene (SIS) rubber is less than 10 parts by weight based on 100 parts by weight of the non-curable rubber-based adhesive composition for the touch screen panel, an amount of a solvent is relatively increased even though there is no problem in view of coating property, such that it is not favorable in view of cost, and the amount of the solvent to be volatilized during coating is increased, such that if a solvent that is not volatilized remains, there is a problem in curing. In addition, when the content of the styrene-isoprene-styrene (SIS) rubber is more than 30 parts by weight based on 100 parts by weight of the non-curable rubber-based adhesive composition for the touch screen panel, there is a problem in view of coating property due to an increase in viscosity.

The styrene-isoprene-styrene (SIS) rubber to be used in the related art is characterized by being cured, and the curing degree (gel content) of the cured styrene-isoprene-styrene (SIS) rubber is about 80% to about 99%. The cured styrene-isoprene-styrene (SIS) rubber has a high curing degree (gel content), such that elasticity is low and wetting property is not sufficient.

The non-curable rubber-based adhesive composition for the touch screen panel according to the present invention is characterized by being non-curable, such that it is preferable that a separate curing agent is not contained.

In addition, the non-curable rubber-based adhesive composition for the touch screen panel does not contain a separate adhesion promoter to increase release peeling force, such that a predetermined level of release peeling force between the base film and the release film may be maintained, and residues may not be caused at the time of high-temperature peeling, and a high level of wetting property may be secured.

Meanwhile, the non-curable rubber-based adhesive composition for the touch screen panel may further contain at least one selected from the group consisting of ultraviolet stabilizers, antioxidants, fillers, and plasticizers, in addition to the styrene-isoprene-styrene (SIS) rubber. The additive may be suitably controlled within the range in which physical properties of the adhesive composition are not inhibited, and accordingly, the non-curable rubber-based adhesive composition for the touch screen panel may further contain the additives such as pigments, dispersants, anti-foaming agents, thickening agents, silane coupling agents, polishes, etc.

Further, the present invention provides a non-curable rubber-based adhesive film for a touch screen panel including: a base film; an adhesive layer formed by coating the non-curable rubber-based adhesive composition for the touch screen panel on the base film; and a release film formed on the adhesive layer.

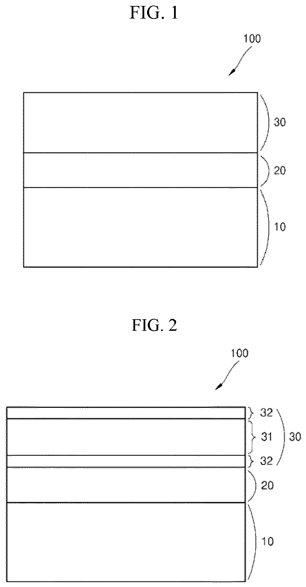

FIG. 1 is a cross-sectional view schematically showing a non-curable rubber-based adhesive film for a touch screen panel according to an exemplary embodiment of the present invention.

As shown in FIG. 1, the non-curable rubber-based adhesive film 100 for the touch screen panel according to an exemplary embodiment of the present invention includes a base film 10; an adhesive layer 20 formed by coating the non-curable rubber-based adhesive composition for the touch screen panel on the base film; and a release film 30 formed on the adhesive layer 20.

FIG. 2 is a cross-sectional view schematically showing a non-curable rubber-based adhesive film for a touch screen panel according to another exemplary embodiment of the present invention.

As shown in FIG. 2, the release film 30 includes a base layer 31; and a release layer 32 formed on one surface or both surfaces of the base layer 31.

The base film 10 preferably includes at least one selected from the group consisting of a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene -propylene copolymer film, an ethylene-ethyl acrylate copolymer film, an ethylene-methyl acrylate copolymer film, and a polyimide film, and more preferably, a polyethylene terephthalate film, but the present invention is not limited thereto.

The base film 10 preferably has a thickness of 25 µm to 300 µm, and more preferably, 30 µm to 200 µm, but the thickness of the base film is not limited thereto. When the thickness of the base film 10 is maintained within the above-described range, the base film is applicable to a thin touch screen panel, and has excellent durability, adhesion, wettability, etc.

The adhesive layer 20 is formed by coating the non-curable rubber-based adhesive composition for the touch screen panel on the base film 10.

The curing degree (gel content) of the adhesive layer 20 is preferably 0%, but the curing degree of the adhesive layer is not limited thereto. The non-curable rubber-based adhesive composition for the touch screen panel may be coated without curing, thereby forming the adhesive layer 11 having a curing degree (gel content) of 0%.

The adhesive layer 20 interposed between the base film 10 and the release film 30 and applied to the touch screen panel is generally removed before it is used by users after shipping as a product, such that a high level of heat resistance is not required, and accordingly, the adhesive layer 11 having a curing degree (gel content) of 0% may maintain sufficient durability for being applied to the touch screen panel.

The release peeling force of the adhesive layer 11 is preferably 10 g/in to 30 g/in, but the release peeling force of the adhesive layer is not limited thereto. Here, when the release peeling force of the adhesive layer 11 is less than 10 g/in, wetting property is not sufficient, and when the release peeling force of the adhesive layer 11 is more than 30 g/in, the release layer 32 formed on one surface or both surfaces of the base layer 31 through release treatment using a silicone-based release agent, etc., is transferred, and residues occur on the surface thereof, such that it provides unfavorable effects on a final product.

The release film 30 is formed on the adhesive layer 20, and the release film 30 may include a base layer 31; and a release layer 32 formed on one surface or both surfaces of the base layer 31, and may further include an antistatic layer (not shown) between the base layer 31 and the release layer 32.

Similar to the base film 10, the base layer 31 preferably includes at least one selected from the group consisting of a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene -propylene copolymer film, an ethylene-ethyl acrylate copolymer film, an ethylene-methyl acrylate copolymer film, and a polyimide film, and more preferably, a polyethylene terephthalate film, but the present invention is not limited thereto.

The release layer 32 is formed on one surface or both surfaces of the base layer 31 through release treatment. Examples of the release agent used for the release treatment may include an alkyd-based release agent, a silicone-based release agent, a fluorine-based release agent, an unsaturated ester-based release agent, a polyolefin-based or a wax-based release agent, etc. In order to secure heat resistance, the alkyd-based release agent, the silicone-based release agent, or the fluorine-based release agent is preferable, and the silicone-based release agent is more preferable, but the present invention is not limited thereto.

The antistatic layer (not shown) may contain antistatic materials such as nanofibrous conductive materials, conductive nano organic particles, conductive nano inorganic particles, ionic compounds, etc., thereby exhibiting antistatic performance.

Further, a touch screen panel to which the adhesive layer according to the present invention is applied may be, for example, a capacitive type touch screen panel. In addition, a specific structure or a formation method of a touch panel to which the rubber-based adhesive composition of the present invention is applied is not specifically limited as long as the adhesive layer according to the present invention is applied, but general configurations of the corresponding field may be adopted.

Therefore, the non-curable rubber-based adhesive composition for the touch screen panel according to the present invention contains the styrene-isoprene-styrene (SIS) rubber. Even though the adhesive layer formed by coating the non-curable rubber-based adhesive composition for the touch screen panel is not cured, the adhesive layer may maintain durability for being applied to the touch screen panel by the rubber-based adhesive composition, have excellent wetting property to the base film, and maintain a predetermined level of release peeling force between the base film and the release film without causing residues after high-temperature peeling.

Hereinafter, preferred embodiments of the present invention will be described to assist in understanding the present invention. However, the following exemplary embodiments are provided only to more easily understand the present invention, and accordingly, the present invention is not limited thereto.

### [Example]

### Example 1

Toluene (75 g) as a solvent was added to a styrene-isoprene-styrene (SIS) rubber (25 g) (Mw = 60,000) (styrene content = 15 to 20 wt%), and sufficiently stirred at room temperature (25 °C) at 600 rpm, thereby preparing a non-curable rubber-based adhesive composition for a touch screen panel.

### Example 2

A non-curable rubber-based adhesive composition for a touch screen panel of Example 2 was prepared by the same method as Example 1 except for adding Regalite 1125 (5 g) as an adhesion promoter.

### Example 3

A non-curable rubber-based adhesive composition for a touch screen panel of Example 3 was prepared by the same method as Example 1 except for adding an acrylic-based resin (5 g) (90 mol% of 2-ethylhexyl acrylate and 10 mol% of acrylic acid) as an adhesion promoter.

### Comparative Example 1

An acrylic-based adhesive composition of Comparative Example 1 was prepared by adding Toluene (75 g) as a solvent to an acrylic-based resin (25 g) (90 mol% of 2-ethylhexyl acrylate and 10 mol% of acrylic acid), followed by sufficiently stirring, and then, applying hot air to cure the obtained mixture.

### Experimental Example

Each adhesive layer was formed by coating each adhesive composition prepared by Examples 1 to 3 and Comparative Example 1 on a non-treated PET release film using a knife coater (coating thickness: 20 µm).

### 1. Measurement of curing degree (gel content)

An adhesive layer was cut into a size of length x width (10 cm × 2.5 cm) and weighed, then, a toluene solvent (50 ml) was put into a PET bottle, and stored at room temperature for 24 hours. The fully swollen adhesive layer was filtered through 200 mesh prepared in a size of 130 mm×130 mm, and dried in 110 °C oven for 4 hours, and weighed. A difference between an initial weight of the adhesive layer and a weight of the adhesive layer after being filtered was calculated, thereby measuring a final gel content.

### 2. Measurement of wetting speed

An adhesive layer on which a non-treated PET release film was formed was cut into a size of length x width (10 cm × 2.5 cm) and placed on a glass, and put three points by a finger. Then, time required for attaching the entire of the adhesive layer on which the non-treated PET release film was formed was measured.

### 3. Measurement of whether residues occur at the time of high-temperature peeling

An adhesive layer on which a non-treated PET release film was formed was attached on a glass surface and maintained in 80 °C oven for 1 day, and the non-treated PET release film was peeled. Whether residues of the adhesive layer occurred at the time of peeling the non-treated PET release film was observed.

### 4. Measurement of release peeling force

After an adhesive layer on which a non-treated PET release film was formed was cut into a size of length x width (10 cm × 2.5 cm), one surface of the sample was attached onto a non-treated PET film (YULCHON Chemical Co., Ltd., SG00) having a thickness of 50 µm, by moving 2 kg of a roller up and down twice. After 30 minutes while maintaining the sample at room temperature (23 °C), release peeling force was measured at a peeling speed of 300 mm/min and a peeling angle of 180 degrees using a peeling force tester.

Results of the curing degree (gel content), wetting speed, whether residues occur at the time of high-temperature peeling, and release peeling force as measured above were summarized in Table 1 below.

**[Table 1]**

| Classification | Resin (g) | Adhesion promoter (g) | Curing degree (Gel content) (%) | Wetting speed (sec) | Whether residues occurs at the time of high-temperature peeling | Release peeling force (gf/in) |
|---|---|---|---|---|---|---|
| Example 1 | SIS Rubber (25 g) | - | 0 | 2 | Residues do not occur | 10 |
| Example 2 | SIS Rubber (25 g) | Regalite 1125 (5 g) | 0 | 4 | Residues do not occur | 40 |
| Example 3 | SIS Rubber (25 g) | Acrylic-based Resin (5 g) | 0 | 2 | Residues occur | 100 |
| Comparative Example 1 | Acrylic -based Resin (25 g) | - | 50 | 6 | Residues do not occur | 150 |

As shown in Table 1 above, it could be confirmed that the adhesive layer formed by coating the non-curable rubber-based adhesive composition for the touch screen panel according to Example 1 had a curing degree (gel content) of 0%, which was non-curable. In addition, it could be confirmed that the wetting speed of the adhesive layer was 2 seconds or less, and accordingly, wetting property to the base film was significantly excellent. Further, it could be confirmed that a predetermined level of release peeling force (10 gf/in to 30 gf/in) between the base film and the release film could be maintained without causing residues after the high-temperature peeling.

The non-curable rubber-based adhesive compositions for the touch screen panel according to Examples 2 and 3 had the curing degree (gel content) of 0%, which were non-curable. However, it could be confirmed that the non-curable rubber-based adhesive compositions for the touch screen panel according to Examples 2 and 3 had a longer wetting speed than that of Example 1 and had residues occurred at the time of the high-temperature peeling since they contained the adhesion promoter.

The above description of the present invention is provided for illustrative purposes, and it will be understood to those skilled in the art that the exemplary embodiments can be easily modified into various forms without changing the technical spirit or essential features of the present invention. Accordingly, the exemplary embodiments described herein are provided by way of example only in all aspects and should not be construed as being limited thereto.

### [Detailed Description of Main Elements]

- 100:: non-curable rubber-based adhesive film
- 10:: base film
- 20:: adhesive layer
- 30:: release film
- 31:: base layer
- 32:: release layer

## Claims

1. A non-curable rubber-based adhesive composition for a touch screen panel comprising:
a styrene-isoprene-styrene (SIS) rubber
wherein the weight average molecular weight of the styrene-isoprene-styrene (SIS) rubber is 5,000 to 200,000,
the styrene content of the styrene-isoprene-styrene (SIS) rubber is 15 wt% to 30 wt%, and
the non-curable rubber-based adhesive composition for a touch screen panel does not contain an adhesion promoter.

2. A non-curable rubber-based adhesive film for a touch screen panel comprising:
a base film;
an adhesive layer formed by coating the non-curable rubber-based adhesive composition for the touch screen panel of claim 1 on the base film; and
a release film formed on the adhesive layer.

3. The non-curable rubber-based adhesive film for a touch screen panel according to claim 2, wherein a curing degree (gel content) of the adhesive layer is 0%.

4. The non-curable rubber-based adhesive film for a touch screen panel according to claim 2, wherein the release film includes a base layer; and a release layer formed on one surface or both surfaces of the base layer.

5. The non-curable rubber-based adhesive film for a touch screen panel according to claim 4, wherein the release film further includes an antistatic layer between the base layer and the release layer.

## Patentansprüche

1. Nicht aushärtbare Klebstoffzusammensetzung auf Kautschukbasis für ein Touchscreen-Panel, umfassend:
einen Styrol-Isopren-Styrol (SIS) Kautschuk,
wobei das gewichtsmittlere Molekulargewicht des Styrol-Isopren-Styrol (SIS) Kautschuks 5.000 bis 200.000 beträgt,
der Styrolgehalt des Styrol-Isopren-Styrol (SIS) Kautschuks 15 Gew.-% bis 30 Gew.-% beträgt und
die nicht aushärtbare Klebstoffzusammensetzung auf Kautschukbasis für ein Touchscreen-Panel keinen Haftvermittler enthält.

2. Nicht aushärtbarer Klebstofffilm auf Kautschukbasis für ein Touchscreen-Panel, umfassend:
einen Basisfilm;
eine Klebstoffschicht, die durch Beschichten des Basisfilms mit der nicht aushärtbaren Klebstoffzusammensetzung auf Kautschukbasis für das Touchscreen-Panel nach Anspruch 1 gebildet wird; und
einen Trennfilm, der auf der Klebstoffschicht gebildet wird.

3. Nicht aushärtbarer Klebstofffilm auf Kautschukbasis für ein Touchscreen-Panel nach Anspruch 2, wobei ein Härtungsgrad (Gelgehalt) der Klebstoffschicht 0% beträgt.

4. Nicht aushärtbarer Klebstofffilm auf Kautschukbasis für ein Touchscreen-Panel nach Anspruch 2, wobei der Trennfilm eine Basisschicht enthält; und eine Trennschicht, die auf einer Oberfläche oder beiden Oberflächen der Basisschicht gebildet wird.

5. Nicht aushärtbarer Klebstofffilm auf Kautschukbasis für ein Touchscreen-Panel nach Anspruch 4, wobei der Trennfilm ferner eine antistatische Schicht zwischen der Basisschicht und der Trennschicht enthält.

## Revendications

1. Composition d'adhésif à base de caoutchouc non durcissable pour un panneau d'écran tactile comprenant :
un caoutchouc de styrène-isoprène-styrène (SIS)
dans laquelle le poids moléculaire moyen en poids du caoutchouc de styrène-isoprène-styrène (SIS) est de 5000 à 200 000,
la teneur en styrène du caoutchouc de styrène-isoprène-styrène (SIS) est de 15 % en poids à 30 % en poids, et
la composition d'adhésif à base de caoutchouc non durcissable pour un panneau d'écran tactile ne contient pas un promoteur d'adhérence.

2. Film adhésif à base de caoutchouc non durcissable pour un panneau d'écran tactile comprenant :
un film de base ;
une couche adhésive formée par le revêtement de la composition d'adhésif à base de caoutchouc non durcissable pour un panneau d'écran tactile selon la revendication 1 sur le film de base ; et
un film antiadhésif (release film) formé sur la couche adhésive.

3. Film adhésif à base de caoutchouc non durcissable pour un panneau d'écran tactile selon la revendication 2, dans lequel un degré de durcissement (teneur en gel) de la couche adhésive est de 0 %.

4. Film adhésif à base de caoutchouc non durcissable pour un panneau d'écran tactile selon la revendication 2, dans lequel le film antiadhésif inclut une couche de base ; et une couche antiadhésive formée sur une surface ou les deux surfaces de la couche de base.

5. Film adhésif à base de caoutchouc non durcissable pour un panneau d'écran tactile selon la revendication 4, dans lequel le film antiadhésif inclut en outre une couche antistatique entre la couche de base et la couche antiadhésive.
